# EUROPÄISCHE PATENTANMELDUNG

(11) **EP 1 860 383 A2**
(43) Veröffentlichungstag der Anmeldung: **28.11.2007**
(21) Anmeldenummer: 07009896.7
(22) Anmeldetag: 18.05.2007
(51) Int. Cl.: F24D 19/10

(54) **Verfahren zum Betreiben einer Solaranlage**

(30) Priorität: 26.05.2006 DE 102006024703
(71) Anmelder: ROBERT BOSCH GMBH, 70442 Stuttgart (DE)
(72) Erfinder: Lustig, Konrad, Dr., 73730 Esslingen (DE)

(57) **Zusammenfassung**

Die Erfindung betrifft ein Verfahren zum Betreiben einer Solaranlage zur Warmwasserbereitung und/oder zur Heizungsunterstützung, wobei die Solaranlage mindestens zwei Kollektorfelder mit jeweils mindestens einem Sonnenkollektor aufweist, welche jeweils an einen getrennt voneinander geregelten Solarkreis mit Pumpe angeschlossen sind, in dem eine Solarflüssigkeit als Wärme übertragendes Medium zirkuliert, wobei mittels der Solarflüssigkeit die aus der Solarenergie gewonnene Wärme auf das Wasser eines Warmwasserspeichers zur Warmwasserbereitung und/oder auf das Heizmedium eines Heizungskreises übertragen wird und wobei jede Pumpe in den einzelnen Solarkreisen nach der Temperaturdifferenz zwischen den an einem Kollektortemperaturfühler jedes Kollektorfeldes und mindestens einem Speichertemperaturfühler im unteren Bereich des Warmwasserspeichers erfassten Temperaturen geregelt wird.

Aufgabe der Erfindung ist es, den Betrieb einer Solaranlage zu optimieren sowie mögliche Installationsfehler zu erkennen und in Form einer Wartungsmeldung anzuzeigen.

Gekennzeichnet ist das Verfahren dadurch, dass in den jeweiligen Kollektorfeldern vertauschte Kollektortemperaturfühler, vertauschte Speichertemperaturfühler bei Parallelschaltung von mindestens zwei Warmwasserspeichern und/oder vertauschte Pumpen über eine laufende Überwachung von Betriebswerten der Solaranlage erkannt werden und dass beim Vorliegen eines Fehlers ein Regelnotbetrieb eingeleitet wird.

## Beschreibung

Die Erfindung betrifft ein Verfahren zum Betreiben einer Solaranlage nach dem Oberbegriff des Patentanspruches 1.

Gattungsgemäße Solaranlagen zur Warmwasserbereitung und/oder zur Heizungsunterstützung weisen mindestens zwei Kollektorfelder mit jeweils mindestens einem Solarkollektor auf. Diese sind an einzelne, getrennt voneinander geregelte Solarkreise mit Pumpe und mit einer Solarflüssigkeit als Wärmeträgermedium angeschlossen. Damit wird die Solarwärme auf einen Warmwasserspeicher und/oder auf einen Heizungskreislauf der Gebäudebeheizung übertragen. Die Warmwasserspeicher besitzen einen Wärmetauscher im unteren Bereich zur Übertragung der Wärme aus dem Solarkreislauf an das Wasservolumen. Jede Pumpe in den einzelnen Solarkreisen wird üblicherweise nach der Temperaturdifferenz zwischen den an einem Kollektortemperaturfühler jedes Kollektorfeldes und mindestens einem Speichertemperaturfühler im unteren Bereich des Warmwasserspeichers erfassten Temperaturen geregelt. Der Speichertemperaturfühler kann entweder direkt im unteren Bereich des Warmwasserspeichers oder in der dort einmündenden Rücklaufleitung des Solarkreises montiert sein. Der Kollektortemperaturfühler muss an der wärmsten Stelle im Kollektorfeld positioniert sein. Diese Stelle ist üblicherweise der Austritt des Wärmeträgermediums aus dem Kollektorfeld, also die Vorlaufleitung. Kollektor- und Speichertemperaturfühler sind an einen Regler für die Solaranlage angeschlossen.

Da die solare Wärme nicht unbegrenzt zur Verfügung steht, weisen derartige Warmwasserspeicher in der Regel einen weiteren Wärmetauscher auf, mit dem nur der obere Bereich durch eine so genannte Nachladung über den Wärmeerzeuger erwärmt werden kann. Für einen günstigen Wirkungsgrad der Solaranlage ist es generell wichtig, dass vorrangig das solare Wärmeangebot zum Aufheizen des Warmwasserspeichers und/oder zur Heizungsunterstützung dient, und dass eine Nachladung durch den Wärmeerzeuger nach Möglichkeit nur in wenigen Fällen erfolgt, um eine gute Energiebilanz zu erzielen.

Die beiden Kollektortemperaturfühler müssen an vorgegebene Eingänge an einem zugeordneten Regelgerät angeschlossen werden, denn jedes Kollektorfeld in einer Anlage wird getrennt geregelt. Die Regelalgorithmen entsprechen dabei im Wesentlichen den eines einzelnen Kollektorfeldes, da die Energie immer an eine gemeinsame Senke, zum Beispiel an einen Warmwasserspeicher, abgeben wird. Werden die die Anschlüsse der beiden Kollektorfühler oder die Fühlerpositionen für die beiden Kollektorfelder vertauscht, bekommen die Einzelfeldregelungen falsche Werte für die Kollektortemperatur geliefert. Dadurch wird fälschlicherweise die Pumpe im Solarkreis des jeweils anderen Kollektorfeldes aktiviert oder deaktiviert. Wegen der Fehlfunktion des Reglers kann dann die Solarenergie nicht oder nur eingeschränkt genutzt werden. In bekannten Reglern führt dies möglicherweise zu einer dauerhaften Fehlfunktion, die nicht schnell oder automatisch erkannt wird.

Aufgabe der vorliegenden Erfindung ist es, den Betrieb einer Solaranlage zu optimieren sowie mögliche Installationsfehler zu erkennen und in Form einer Wartungsmeldung anzuzeigen. Dabei soll ein möglichst effektiver Regelnotbetrieb sichergestellt werden, insbesondere um Einbußen an Solarertrag zu vermeiden.

Erfindungsgemäß wird dies mit den Merkmalen des Patentanspruches 1 gelöst. Vorteilhafte Weiterbildungen sind den Unteransprüchen zu entnehmen.

Das Verfahren zum Betreiben einer Solaranlage ist dadurch gekennzeichnet, dass in den jeweiligen Kollektorfeldern vertauschte Kollektortemperaturfühler, vertauschte Speichertemperaturfühler bei Parallelschaltung von mindestens zwei Warmwasserspeichern und/oder vertauschte Pumpen über eine laufende Überwachung von Betriebswerten der Solaranlage erkannt werden und dass beim Vorliegen eines Fehlers ein Regelnotbetrieb eingeleitet wird. Mit dem Einsetzen des Regeinotbetriebes an einem zugeordneten Regler wird eine Fehler- oder Wartungsmeldung generiert und signalisiert.

Durch Auswertung von einer oder mehreren Summen der Temperaturgradienten am Kollektortemperaturfühler werden in den jeweiligen Kollektorfeldern vertauschte Kollektortemperaturfühler erkannt. Dazu wird ein erster Temperaturgradient für ein erstes Kollektorfeld bei ausgeschalteter Pumpe von einem zweiten Temperaturgradient für ein zweites Kollektorfeld bei ausgeschalteter Pumpe subtrahiert. Parallel oder ergänzend dazu wird noch ein erster Temperaturgradient für ein erstes Kollektorfeld bei eingeschalteter Pumpe von einem zweiten Temperaturgradient für ein zweites Kollektorfeld bei eingeschalteter Pumpe subtrahiert. Es wird dabei jeder Temperaturgradient mit dem Wert Null oder Eins für den aktuellen Schaltzustand der Pumpe des jeweils anderen Kollektorfeldes multipliziert. Vertauschte Kollektortemperaturfühler liegen daher vor, wenn eine oder beide Summen der Temperaturgradienten über einen vorgebbaren Schwellwert ansteigen. Dazu kommt es, weil die Solarkreispumpe des jeweils anderen Kollektorfeldes aktiviert bzw. deaktiviert wird. Dies führt wiederum zu einem starken Anstieg der Kollektortemperatur trotz eingeschalteter Pumpe und daraus resultiert ein extremer Anstieg in einer oder in mehreren Summen der Temperaturgradienten am Kollektortemperaturfühler.

Beim Überschreiten eines vorgebbaren Schwellwertes für eine oder mehrere Summen der Temperaturgradienten werden die Messwerte der mindestens zwei Kollektortemperaturfühler in den mindestens zwei Kollektorfeldern im Regler gegeneinander vertauscht. Danach arbeitet der Regler mit dem üblichen Regelalgorithmus. In einer bevorzugten Ausführungsform werden die Summen der Temperaturgradienten regelmäßig, vorzugsweise täglich, zurückgesetzt.

Mit der Erfindung steht daher ein einfaches Verfahren zum Betreiben einer Solaranlage zur Verfügung, mit dem mögliche Installationsfehler erkannt und in Form einer Wartungsmeldung angezeigt werden. Parallel dazu geht der Regler in einen effektiven Regelnotbetrieb bis zum Beheben des Fehlers über, um sicherzustellen, dass Einbußen an Solarertrag vermieden werden. Daher ist ein Fehler nicht mehr terminkritisch und dringlich, denn die Behebung kann im Rahmen der nächsten anstehenden Anlagenwartung erfolgen. Somit wird der Betrieb einer Solaranlage optimiert sowie die Installation, Wartungsfreundlichkeit und Bedienung verbessert. Eine Integration des Verfahrens in den Regler einer Solaranlage ist leicht möglich, genauso wie die Übertragung auf das Erkennen von vertauschten Speichertemperaturfühlern bei Parallelschaltung von mindestens zwei Warmwasserspeichern und/oder von vertauschten Pumpen bei einer Solaranlage mit mindestens zwei Kollektorfeldern.

## Patentansprüche

1. Verfahren zum Betreiben einer Solaranlage zur Warmwasserbereitung und/oder zur Heizungsunterstützung, wobei die Solaranlage mindestens zwei Kollektorfelder mit jeweils mindestens einem Sonnenkollektor aufweist, welche jeweils an einen getrennt voneinander geregelten Solarkreis mit Pumpe angeschlossen sind, in dem eine Solarflüssigkeit als Wärme übertragendes Medium zirkuliert, wobei mittels der Solarflüssigkeit die aus der Solarenergie gewonnene Wärme auf das Wasser eines Warmwasserspeichers zur Warmwasserbereitung und/oder auf das Heizmedium eines Heizungskreises übertragen wird und wobei jede Pumpe in den einzelnen Solarkreisen nach der Temperaturdifferenz zwischen den an einem Kollektortemperaturfühler jedes Kollektorfeldes und mindestens einem Speichertemperaturfühler im unteren Bereich des Warmwasserspeichers erfassten Temperaturen geregelt wird,
**dadurch gekennzeichnet, dass** in den jeweiligen Kollektorfeldern vertauschte Kollektortemperaturfühler, vertauschte Speichertemperaturfühler bei Parallelschaltung von mindestens zwei Warmwasserspeichern und/oder vertauschte Pumpen über eine laufende Überwachung von Betriebswerten der Solaranlage erkannt werden und dass beim Vorliegen eines Fehlers ein Regelnotbetrieb eingeleitet wird.

2. Verfahren nach Anspruch 1,
**dadurch gekennzeichnet, dass** mit dem Einsetzen des Regelnotbetriebes an einem zugeordneten Regler eine Fehler- oder Wartungsmeldung signalisiert wird.

3. Verfahren nach den Ansprüchen 1 oder 2,
**dadurch gekennzeichnet, dass** in den jeweiligen Kollektorfeldern vertauschte Kollektortemperaturfühler durch Auswertung von einer oder mehreren Summen der Temperaturgradienten am Kollektortemperaturfühler erkannt werden, indem ein erster Temperaturgradient für ein erstes Kollektorfeld bei ausgeschalteter Pumpe von einem zweiten Temperaturgradient für ein zweites Kollektorfeld bei ausgeschalteter Pumpe subtrahiert wird und/oder indem ein erster Temperaturgradient für ein erstes Kollektorfeld bei eingeschalteter Pumpe von einem zweiten Temperaturgradient für ein zweites Kollektorfeld bei eingeschalteter Pumpe subtrahiert wird, wobei jeder Temperaturgradient mit dem Wert Null oder Eins für den aktuellen Schaltzustand der Pumpe des jeweils anderen Kollektorfeldes multipliziert wird.

4. Verfahren nach einem der Ansprüche 1 bis 3,
**dadurch gekennzeichnet, dass** in den jeweiligen Kollektorfeldern vertauschte Kollektortemperaturfühler durch Auswertung von einer oder mehreren Summen der Temperaturgradienten am Kollektortemperaturfühler erkannt werden und vorliegen, wenn eine oder beide Summen der Temperaturgradienten über einen vorgebbaren Schwellwert ansteigen.

5. Verfahren nach einem der Ansprüche 1 bis 4,
**dadurch gekennzeichnet, dass** beim Überschreiten eines vorgebbaren Schwellwertes für eine oder mehrere Summen der Temperaturgradienten die Messwerte der mindestens zwei Kollektortemperaturfühler in den mindestens zwei Kollektorfeldern im Regler gegeneinander vertauscht werden, wobei der Regler danach mit dem üblichen Regelalgorithmus arbeitet.

6. Verfahren nach einem der Ansprüche 1 bis 5,
**dadurch gekennzeichnet, dass** die Summen der Temperaturgradienten regelmäßig, vorzugsweise täglich, zurückgesetzt werden.
